# FASCICULE DE BREVET EUROPEEN

(11) **EP 1 600 348 B1**
(45) Date de publication et mention de la délivrance du brevet: **07.01.2009**
(21) Numéro de dépôt: 05011087.3
(22) Date de dépôt: 23.05.2005
(51) Int. Cl.: B60T 13/14, B60T 17/22, B60T 11/26

(54) **Reservoir, utilisation de ce reservoir pour liquide de frein et procede de remplissage de ce reservoir**
Behälter, Verwendung eines solchen Behälters für Bremsflüssigkeit, und Verfahren zum Befüllen eines solchen Behälters
Reservoir, use of such a reservoir for brake fluid, and method of filling such a reservoir

(30) Priorité: 27.05.2004 FR 0405757
(43) Date de publication de la demande: 30.11.2005
(73) Titulaire: ROBERT BOSCH GMBH, 70442 Stuttgart (DE)
(72) Inventeur: Fourcade, Jean, 77420 Champs sur Marne (FR); Attard, Jean-Marc, 60340 Villiers sous St Leu (FR)
(74) Mandataire: Hurwic, Aleksander Wiktor

(56) Documents cités:
- DE-A- 3 824 918
- US-A- 6 105 611

## Description

La présente invention concerne un réservoir pour un liquide, notamment un réservoir pour liquide de frein destiné à équiper un véhicule automobile.

L'invention concerne également un procédé de remplissage de liquide de ce réservoir.

Compte-tenu des aléas d'inclinaison du réservoir, on constate que, statistiquement, le niveau atteint par le liquide lors du remplissage du réservoir est plus élevé lorsque l'orifice de remplissage est sensiblement situé au centre du réservoir.

Or, lorsque le réservoir est incliné et l'orifice de remplissage déporté, c'est-à-dire écarté d'un axe central du réservoir, le niveau de remplissage de liquide peut être réduit de façon indésirable.

Cette situation est courante dans le cas d'un réservoir pour liquide de frein d'un véhicule automobile.

DE 3824918 A décrit un réservoir de liquide de frein comportant une paroi supérieure munie d'un orifice d'entrée pour le remplissage de liquide du réservoir et orifice d'entrée étant écarté d'un axe de référence du corps du réservoir. Le réservoir comporte en outre une paroi interne s'étendant parallèlement à ladite paroi supérieure.

Rappelons en effet que le réservoir pour liquide de frein est destiné à être raccordé au circuit hydraulique de freinage, qui doit impérativement être rempli de liquide de frein pour que puisse s'établir son régime stationnaire de fonctionnement.

C'est pourquoi le remplissage du réservoir ne peut être accompli avant sa mise en place dans le compartiment moteur. L'orifice de remplissage du réservoir doit donc être accessible.

Compte tenu de l'agencement des organes fonctionnels environnants, l'orifice de remplissage peut être déporté et le réservoir incliné.

Il se révèle alors problématique de remplir le réservoir au niveau souhaité. De fait, le remplissage s'avère généralement insuffisant, car il se produit un refoulement du liquide par l'orifice de remplissage avant même que le niveau maximum soit atteint.

L'invention vise, pour remédier notamment aux inconvénients précités, à permettre un remplissage du réservoir au plus proche du niveau maximum théorique, même lorsque le réservoir est incliné.

A cet effet, l'invention propose un réservoir comportant un corps ayant une paroi supérieure munie d'un orifice d'entrée pour le remplissage de liquide du réservoir, cet orifice d'entrée étant écarté d'un axe de référence du corps de réservoir, caractérisé en ce qu'il comporte un conduit de remplissage raccordé à l'orifice d'entrée par lequel le conduit débouche à l'extérieur du corps de réservoir, ce conduit présentant un orifice.

interne par lequel le conduit débouche à l'intérieur du corps de réservoir, ce conduit formant un déflecteur qui dévie le flux du liquide depuis l'orifice d'entrée vers l'axe de référence du corps de réservoir, en ce que
le conduit de remplissage présente une première portion raccordée à l'orifice d'entrée et qui s'étend dans l'axe de celui-ci, ainsi qu'une seconde portion, raccordée à la première et qui s'étend perpendiculairement à celle-ci, et en ce que
la seconde portion du conduit de remplissage jouxte la paroi supérieure.

Ce réservoir convient particulièrement à une utilisation comme réservoir pour liquide de frein d'un véhicule automobile.

Le remplissage de ce réservoir, une fois mis en place (par exemple dans le compartiment moteur du véhicule lorsqu'il est destiné à être utilisé comme réservoir pour liquide de frein), consiste à :
- raccorder, de préférence de manière étanche, le conduit de remplissage à une tubulure d'alimentation en liquide ;
- remplir le réservoir jusqu'à ce que le niveau du liquide atteigne ou dépasse l'orifice interne du conduit de remplissage, et
- aspirer le trop-plein de liquide restant dans le conduit de remplissage.

Ainsi, même lorsque le réservoir est penché (c'est-à-dire que la paroi supérieure est inclinée par rapport à l'horizontale), le réservoir peut être rempli à un niveau proche du niveau maximum théorique, sans toutefois le dépasser.

La mise au niveau du liquide s'effectue automatiquement par évacuation du trop-plein dans le conduit de remplissage, sans qu'il soit nécessaire de vérifier le niveau atteint par le liquide.

L'axe de référence du corps de réservoir peut être un axe central de celui-ci, perpendiculaire à la paroi supérieure.

L'orifice interne est par exemple écarté de l'axe de l'orifice d'entrée ; il est de préférence situé au voisinage de la paroi supérieure.

Suivant un mode de réalisation, l'axe de l'orifice interne du conduit de remplissage est perpendiculaire ou sensiblement perpendiculaire à l'axe de l'orifice d'entrée.

Suivant un mode de réalisation, la première portion du conduit de remplissage se termine au-delà du raccord avec la seconde portion.

De plus, il est préférable, avant de remplir le réservoir d'y faire un vide au moins partiel.

L'invention concerne également un procédé de remplissage de liquide d'un réservoir tel que défini ci-dessus, comportant les étapes consistant à :
- raccorder le conduit de remplissage à une tubulure d'alimentation en liquide ;
- remplir le réservoir jusqu'à ce que le niveau du liquide atteigne ou dépasse l'orifice interne du conduit de remplissage ;
- aspirer le trop-plein de liquide restant dans le conduit de remplissage.

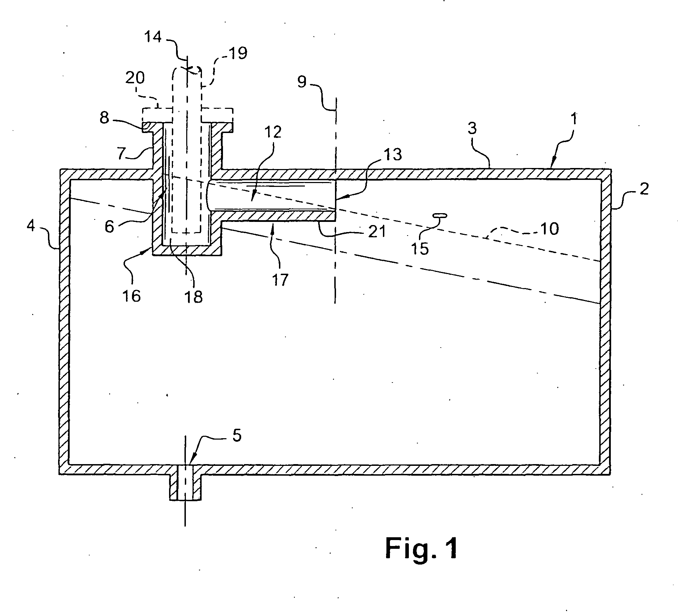

L'invention sera mieux comprise à la lecture de la description qui va suivre, donnée uniquement à titre d'exemple et faite en se référant à la figure du dessin annexé, qui représente un réservoir suivant l'invention, vu en coupe.

Le réservoir 1 représenté sur cette figure comporte un corps 2 définissant une enveloppe qui, bien qu'elle soit ici de forme parallélépipédique, peut adopter, comme on peut l'imaginer, des formes diverses imposées par l'environnement dans lequel le réservoir 1 est placé.

En l'occurrence, il s'agit d'un réservoir 1 destiné à contenir du liquide de frein pour un véhicule automobile, et qui est appelé à être positionné dans le compartiment moteur du véhicule.

Le corps de réservoir 2 comporte une paroi supérieure 3 sensiblement plane, bordée par une paroi latérale 4 terminée, à l'opposé de la paroi supérieure 3, par une paroi de fond munie d'un orifice d'évacuation 5 conformé en une pipette destinée à être raccordée au circuit hydraulique de freinage (non représenté) du véhicule.

La paroi supérieure 3 est munie d'un orifice d'entrée 6 délimité par un goulot 7 prévu en saillie vers l'extérieur du corps de réservoir 2 et terminé par une collerette 8.

Le corps de réservoir 2 présente un axe central 9 défini par l'axe qui, passant par le barycentre du réservoir 1 vide, est perpendiculaire à la paroi supérieure 3.

Le réservoir 1 peut être monté dans une position qui, compte tenu de certaines contraintes ou de certains aléas, est inclinée par rapport à l'horizontale. Dans cette position inclinée, la paroi supérieure 3 forme un angle avec la surface libre du liquide, dont le niveau maximum possible est indiqué sur la figure par la ligne 10 en traits interrompus.

Comme cela est visible sur la figure, l'orifice d'entrée 6 est déporté, c'est-à-dire qu'il est situé à distance de l'axe central 9, en l'occurrence à proximité de la paroi latérale 4. L'axe 14 de l'orifice d'entrée 6 est toutefois parallèle à l'axe central 9.

Cette position de l'orifice d'entrée 6 peut être imposée par l'environnement du réservoir 1. Elle peut résulter, dans le cas d'un réservoir pour liquide de frein, de la forme et de l'agencement des organes voisins du réservoir 1 dans le compartiment moteur du véhicule dans lequel il est monté. Il est vrai que, les constructeurs automobiles cherchant à augmenter sans cesse la compacité de leurs véhicules, l'espace libre se fait rare sous leur capot.

Le réservoir 1 comporte un conduit de remplissage 12, qui est d'une part raccordé à l'orifice d'entrée 6 par lequel le conduit 12 débouche à l'extérieur du corps de réservoir 2, et qui présente d'autre part un orifice interne 13 par lequel il débouche à l'intérieur du corps 2.

Plus précisément, l'orifice interne 13 se trouve à distance de l'orifice d'entrée 6 - autrement dit, il est écarté de l'axe 14 de ce dernier - tout en étant situé à hauteur (en position horizontale du réservoir 1) du niveau maximum théorique de remplissage, lequel est par exemple indiqué par une marque 15 sur la paroi latérale. Il est à noter que le niveau maximum théorique est le niveau que l'on souhaite atteindre sans toutefois le dépasser.

L'orifice interne 13 est ici situé au voisinage de la paroi supérieure 3 pour tenir compte de la localisation du niveau maximum théorique.

Lors du remplissage du réservoir, le conduit de remplissage 12 forme un réservoir secondaire de trop-plein qui s'emplit de liquide dès que celui-ci atteint un niveau dit maximum réel 10, qui dépend de l'inclinaison du réservoir 1, et qui est inférieur au maximum théorique.

Il suffira alors, comme nous le verrons ci-dessous, de vider le trop-plein pour que le niveau du liquide restant dans le réservoir se stabilise à ce maximum réel 10.

Pour être plus précis, et comme cela est représenté sur la figure, le.conduit de remplissage présente une portion amont 16, raccordée à l'orifice d'entrée 6 et qui s'étend dans l'axe 14 de celui-ci, ainsi qu'une portion aval 17 qui, raccordée à la portion amont 16, s'étend perpendiculairement à celle-ci en jouxtant la paroi supérieure 3 et se termine au voisinage de l'axe central 9 par l'orifice interne 13.

Ainsi, le conduit de remplissage 12 forme un déflecteur qui dévie le flux de liquide depuis l'orifice d'entrée 6 vers l'axe central 9 afin de permettre un remplissage optimum (c'est-à-dire au plus proche du niveau maximum théorique indiqué par la marque 15) du réservoir 1, et ce malgré l'inclinaison du réservoir 1 et la localisation déportée de l'orifice d'entrée 6.

Comme cela est visible sur la figure, la portion aval 17 du conduit de remplissage 12 n'est pas située, à proprement parler, dans le prolongement de la portion amont 16. En effet, celle-ci se termine au-delà du raccord avec la portion aval 17 par un cul-de-sac qui délimite une réserve en creux 18.

Les portions amont 16 et aval 17 du conduit de remplissage sont en l'occurrence cylindriques à section circulaire.

Le conduit de remplissage 12 peut être formé intégralement avec le réservoir 1, lequel est par exemple réalisé par moulage dans une matière plastique tel qu'un polypropylène ou un polyamide. Le cas échéant, le réservoir 1 comprend deux coquilles reliées entre elles par soudage ou collage.

Pour remplir le réservoir 1 de liquide, on procède comme suit.

Le réservoir 1 en place, on commence par raccorder de manière étanche le conduit de remplissage 12 à une tubulure d'alimentation 19 en liquide (représentée en traits mixtes sur la figure).

On introduit la tubulure 19 par l'orifice d'entrée 6, dans la portion amont 16, de manière que son extrémité libre 20 dépasse le raccord avec la portion aval 17 pour venir se loger dans la réserve 18.

La tubulure 19 est par exemple équipée d'un joint annulaire 20 qui, lorsque la tubulure 19 est introduite dans le conduit 12 de la manière qui vient d'être décrite, vient s'appliquer contre la collerette 8 du goulot 7 et réalise ainsi l'étanchéité entre la tubulure 19 et le goulot 7.

On alimente alors le réservoir 1 en liquide par l'intermédiaire de la tubulure 19. Dès que le liquide présent dans le réservoir 1 atteint le niveau 10, c'est-à-dire qu'il atteint l'orifice interne 13 du conduit de remplissage 12, il reflue vers ce dernier qu'il envahit.

On stoppe alors l'alimentation en liquide, puis on aspire le trop-plein restant dans le conduit de remplissage 12, par exemple au moyen de la tubulure 19 dont on inverse le flux.

Le niveau du liquide présent dans le réservoir 1 se stabilise alors au maximum réel 10, tandis que, une fois le trop-plein aspiré, il ne reste dans le conduit de remplissage 12 qu'un volume infime de liquide présent dans la réserve 18, dont le niveau est indiqué sur la figure par la ligne en trait mixte.

On voit qu'il n'est pas nécessaire de contrôler de manière précise le niveau du liquide lors du remplissage, puisque l'aspiration du trop-plein permet de réaliser automatiquement une mise à un niveau proche du niveau maximum théorique, tout en étant inférieur ou égal à celui-ci.

Dans le cas d'un réservoir pour liquide de frein, le volume du liquide présent dans le réservoir après le remplissage doit être suffisant pour permettre le remplissage du circuit hydraulique en vue de l'établissement de son régime permanent.

Une fois prélevé une partie du liquide pour le circuit de freinage, le liquide se stabilise à un niveau, indiqué sur la figure par la ligne en trait mixte, tel que, quelles que soient les conditions d'utilisation du véhicule, il existe une réserve suffisante de liquide pour le circuit.

Il est à noter que l'on peut faciliter le remplissage du réservoir 1 en y faisant un vide au moins partiel avant de procéder à son alimentation en liquide.

Par ailleurs, il est possible, lorsque le réservoir est horizontal, de le remplir automatiquement au niveau maximum théorique. Comme l'extrémité de la tubulure 19 se trouve dans la réserve 18, c'est-à-dire axialement au-delà de la portion aval 17, l'aspiration du trop-plein stabilise le niveau du liquide à hauteur de la paroi inférieure 21 de la portion aval 17.

Autrement dit, le niveau du liquide se trouve stabilisé à hauteur de la marque 15 puisque celle-ci se trouve dans le prolongement de l'orifice interne 13, c'est-à-dire au niveau maximum théorique.

Comme nous l'avons vu, l'axe central 9 du réservoir 1 a été choisi comme axe de référence pour le remplissage du réservoir et pour le positionnement et l'orientation du conduit de remplissage 12.

On pourrait toutefois définir différemment l'axe de référence du réservoir - par exemple en fonction de la localisation d'un conduit d'évacuation - sans sortir du cadre de l'invention.

## Revendications

1. Réservoir (1) comportant un corps (2) ayant une paroi supérieure (3) munie d'un orifice d'entrée (6) pour le remplissage de liquide du réservoir (1), cet orifice d'entrée (6) étant écarté d'un axe de référence (9) du corps de réservoir (2), **caractérisé en ce qu'**il comporte un conduit de remplissage (12) raccordé à l'orifice d'entrée (6) par lequel le conduit (12) débouche à l'extérieur du corps de réservoir (2), ce conduit (12) présentant un orifice interne (13) par lequel le conduit (12) débouche à l'intérieur du corps de réservoir (2), ce conduit (12) formant un déflecteur qui dévie le flux du liquide depuis l'orifice d'entrée (6) vers l'axe de référence (9) du corps de réservoir (2), **en ce que** le conduit de remplissage (12) présente une première portion (16) raccordée à l'orifice d'entrée (6) et qui s'étend dans l'axe (14) de celui-ci, ainsi qu'une seconde portion (17), raccordée à la première (16) et qui s'étend perpendiculairement à celle-ci et **en ce que** la seconde portion (17) du conduit de remplissage (12) jouxte la paroi supérieure (3).

2. Réservoir selon la revendication 1, **caractérisé en ce que** l'axe de référence (9) constitue un axe central du corps de réservoir (2), perpendiculaire à la paroi supérieure.

3. Réservoir selon la revendication 1 ou 2, **caractérisé en ce que** l'orifice interne est écarté de l'axe (14) de l'orifice d'entrée (6).

4. Réservoir selon l'une des revendications 1 à 3, **caractérisé en ce que** l'orifice interne (13) est situé au voisinage de la paroi supérieure (3).

5. Réservoir (1) selon l'une des revendications 1 à 4, **caractérisé en ce que** l'axe de l'orifice interne (13) du conduit de remplissage (12) est perpendiculaire ou sensiblement perpendiculaire à l'axe (14) de l'orifice d'entrée (6).

6. Réservoir (1) selon la revendication **4** ou **5**, **caractérisé en ce que** la première portion (16) du conduit de remplissage (12) se termine au-delà du raccord avec la seconde portion (17).

7. Utilisation d'un réservoir (1) selon l'une des revendications 1 à 6, comme réservoir pour liquide de frein pour un véhicule automobile.

8. Procédé de remplissage de liquide d'un réservoir (1) conforme à l'une des revendications 1 **à 6**, comportant les étapes consistant à :
- raccorder le conduit de remplissage (12) à une tubulure (19) d'alimentation en liquide ;
- remplir le réservoir (1) jusqu'à ce que le niveau du liquide atteigne ou dépasse l'orifice interne (13) du conduit de remplissage (12),
- aspirer le trop-plein de liquide restant dans le conduit de remplissage (12).

9. Procédé selon la revendication **8**, **caractérisé en ce que** le raccordement du conduit de remplissage (12) à la tubulure (19) d'alimentation en liquide est réalisé de manière étanche.

10. Procédé selon la revendication **9**, **caractérisé en ce qu'**il comporte une étape qui consiste, avant de remplir le réservoir (1), à y faire un vide au moins partiel.

## Claims

1. Reservoir (1) comprising a body (2) having an upper wall (3) provided with an inlet orifice (6) for filling the reservoir (1) with fluid, this inlet orifice (6) being spaced apart from a reference axis (9) of the reservoir body (2), **characterized in that** it has a filling duct (12) connected to the inlet orifice (6) through which the duct (12) emerges on the outside of the reservoir body (2), this duct (12) having an inner orifice (13) through which the duct (12) emerges on the inside of the reservoir body (2), this duct (12) forming a deflector that diverts the flow of fluid from the inlet orifice (6) towards the reference axis (9) of the reservoir body (2), **in that** the filling duct (12) has a first section (16) connected to the inlet orifice (6) and running in the same axis (14) as the latter, and a second section (17) connected to the first section (16) and running perpendicular thereto, and **in that** the second section (17) of the filling duct (12) adjoins the upper wall (3).

2. Reservoir according to Claim 1, **characterized in that** the reference axis (9) is a central axis of the reservoir body (2) and is perpendicular to the upper wall.

3. Reservoir according to Claim 1 or 2, **characterized in that** the inner orifice is spaced apart from the axis (14) of the inlet orifice (6).

4. Reservoir according to one of Claims 1 to 3, **characterized in that** the inner orifice (13) is located close to the upper wall (3).

5. Reservoir (1) according to one of Claims 1 to 4, **characterized in that** the axis of the inner orifice (13) of the filling duct (12) is perpendicular or approximately perpendicular to the axis (14) of the inlet orifice (6).

6. Reservoir (1) according to Claim 4 or 5, **characterized in that** the first section (16) of the filling duct (12) ends beyond the connection to the second section (17).

7. Use of a reservoir (1) according to one of Claims 1 to 6 as a reservoir for brake fluid for a motor vehicle.

8. Method of filling a reservoir (1) according to one of Claims 1 to 6 with fluid, comprising the following steps:
- connecting the filling duct (12) to a fluid supply manifold (19);
- filling the reservoir (1) until the fluid level reaches or passes the inner orifice (13) of the filling duct (12); and
- evacuating the surplus fluid remaining in the filling duct (12).

9. Method according to Claim 8, **characterized in that** the filling duct (12) is connected to the fluid supply tube (19) in a sealed manner.

10. Method according to Claim 9, **characterized in that** it comprises a step consisting in creating an at least partial vacuum in the reservoir (1) before filling it.

## Patentansprüche

1. Behälter (1) mit einem Körper (2), der eine obere Wand (3) aufweist, die mit einer Eintrittsöffnung (6) zum Füllen des Behälters (1) mit Flüssigkeit versehen ist, wobei diese Eintrittsöffnung (6) von einer Bezugsachse (9) des Behälterkörpers (2) beabstandet ist, **dadurch gekennzeichnet, dass** er eine Füllleitung (12) aufweist, die mit der Eintrittsöffnung (6) verbunden ist, über welche die Leitung (12) außerhalb des Behälterkörpers (2) mündet, wobei diese Leitung (12) eine innere Öffnung (13) aufweist, über welche die Leitung (12) in den Behälterkörper (2) mündet, wobei diese Leitung (12) ein Ablenkelement bildet, das den Flüssigkeitsstrom von der Eintrittsöffnung (6) zur Bezugsachse (9) des Behälterkörpers (2) ablenkt, **dadurch gekennzeichnet, dass** die Füllleitung (12) einen ersten Abschnitt (16) aufweist, der mit der Eintrittsöffnung (6) verbunden ist und sich in deren Achse (14) erstreckt, und einen zweiten Abschnitt (17), der mit dem ersten Abschnitt (16) verbunden ist und sich senkrecht zu diesem erstreckt, und dass der zweite Abschnitt (17) der Füllleitung (12) an die obere Wand (3) angrenzt.

2. Behälter nach Anspruch 1, **dadurch gekennzeichnet, dass** die Bezugsachse (9) eine Mittelachse des Behälterkörpers (2) bildet, die senkrecht zur oberen Wand verläuft.

3. Behälter nach Anspruch 1 oder 2, **dadurch gekennzeichnet, dass** die innere Öffnung von der Achse (14) der Eintrittsöffnung (6) beabstandet ist.

4. Behälter nach einem der Ansprüche 1 bis 3, **dadurch gekennzeichnet, dass** die innere Öffnung (13) nahe der oberen Wand (3) angeordnet ist.

5. Behälter (1) nach einem der Ansprüche 1 bis 4, **dadurch gekennzeichnet, dass** die Achse der inneren Öffnung (13) der Füllleitung (12) senkrecht oder im Wesentlichen senkrecht zur Achse (14) der Eintrittsöffnung (6) verläuft.

6. Behälter (1) nach Anspruch 4 oder 5, **dadurch gekennzeichnet, dass** der erste Abschnitt (16) der Füllleitung (12) jenseits der Verbindung mit dem zweiten Abschnitt (17) endet.

7. Verwendung eines Behälters (1) nach einem der Ansprüche 1 bis 6 als Bremsflüssigkeitsbehälter für ein Kraftfahrzeug.

8. Verfahren zum Füllen eines Behälters (1) nach einem der Ansprüche 1 bis 6 mit Flüssigkeit, wobei das Verfahren die Schritte umfasst, die darin bestehen:
- die Füllleitung (12) an einen Stutzen (19) zur Zuführung von Flüssigkeit anzuschließen,
- den Behälter (1) zu füllen, bis der Flüssigkeitsstand die innere Öffnung (13) der Füllleitung (12) erreicht oder überschreitet,
- die in der Füllleitung (12) bleibende überschüssige Flüssigkeit abzusaugen.

9. Verfahren nach Anspruch 8, **dadurch gekennzeichnet, dass** das Anschließen der Füllleitung (12) an den Stutzen (19) zur Zuführung von Flüssigkeit in dichter Weise realisiert wird.

10. Verfahren nach Anspruch 9, **dadurch gekennzeichnet, dass** es einen Schritt umfasst, der darin besteht, den Behälter (1) zumindest teilweise zu entleeren, bevor er gefüllt wird.
